# EUROPEAN PATENT APPLICATION

(11) **EP 4 332 999 A2**
(43) Date of publication of application: **06.03.2024**
(21) Application number: 23189311.6
(22) Date of filing: 02.08.2023
(51) Int. Cl.: H01F 13/00

(54) **MAGNET ASSEMBLY FOR ORIENTATION AND ORIENTATION METHOD FOR ACTIVE MATERIAL LAYER USING THE SAME**

(30) Priority: 08.08.2022 KR 20220098754
(71) Applicant: Samsung SDI Co., Ltd., Yongin-si, Gyeonggi-do 17084 (KR)
(72) Inventor: LEE, Jinhyon, 17084 Yongin-si (KR); YOON, Yeonhee, 17084 Yongin-si (KR)
(74) Representative: Marks & Clerk LLP

(57) **Abstract**

A magnet assembly for orientation according to an embodiment of the present disclosure includes a metal plate, a lower layer attached to the metal plate and including a plurality of permanent magnets forming a matrix, and an upper layer located on the lower layer and including a plurality of permanent magnets forming the same matrix as the matrix, wherein a ratio of a length of one permanent magnet with respect to the sum of thicknesses of the lower layer and the upper layer is 3:1 to 1:2.

## Description

### BACKGROUND OF THE INVENTION

### (a) Field of the Invention

The present disclosure relates to a magnet assembly and an orientation method using the same, and more particularly, to a magnet assembly for orientation of an active material for a secondary battery and an orientation method using the same.

### (b) Description of the Related Art

A lithium secondary battery, which has recently been spotlighted as a power source for portable small electronic devices, uses an organic electrolyte, thereby exhibiting a discharge voltage twice or more than that of a battery of the related art using an alkaline aqueous solution, and as a result, exhibits a high energy density.

An oxide including a transition metal and lithium having a structure capable of intercalating lithium ions, such as LiCoO₂, LiMn₂O₄, LiNi₁₋ₓCoₓO₂ (0 < x < 1), etc. is mainly used as a cathode active material of a lithium secondary battery.

Various forms of carbon-based materials including artificial, natural graphite, and hard carbon capable of intercalating and deintercalating lithium have been applied as anode active materials, and recently, research into non-carbon-based anode active materials based on silicon or tin has been conducted to obtain higher capacity.

Meanwhile, an anode active material is coated on a current collector and then a magnetic field is applied to perform an orientation process, and the magnetic field is desirable to be applied with a magnet having a strong magnetic force according to an orientation angle. However, in order to increase the size of a magnet, when the size is increased, an electromagnet generates heat by an exoergic reaction, and it is difficult to produce a required large-sized permanent magnet.

### SUMMARY OF THE INVENTION

Accordingly, the present disclosure attempts to provide a magnet assembly for orientation capable of increasing a magnetic force without increasing the size of a magnet and an orientation method using the same.

A magnet assembly for orientation according to an embodiment of the present disclosure includes a metal plate, a lower layer attached to the metal plate and including a plurality of permanent magnets forming a matrix, and an upper layer located on the lower layer and including a plurality of permanent magnets forming the same matrix as the matrix, wherein a ratio of a length of one permanent magnet with respect to the sum of thicknesses of the lower layer and the upper layer is 3:1 to 1:2.

An attractive force attached to the metal plate may be greater than a repulsive force generated neighboring in a column direction of the matrix.

A magnet assembly for orientation according to another embodiment of the present disclosure includes a lower layer including a plurality of permanent magnets forming a matrix, and an upper layer located on the lower layer and including a plurality of permanent magnets forming the same matrix as the matrix, wherein polarities of the permanent magnets of the lower layer and the upper layer are alternately disposed in a row direction of the matrix, and the polarities of the permanent magnets of the lower layer and the upper layer are equally disposed in a column direction. A ratio of a length of one permanent magnet with respect to the sum of thicknesses of the lower layer and the upper layer in the row direction may be 3:1 to 1:2.

The permanent magnets neighboring in the column direction may contact each other.

The upper layer and the lower layer may be combined by an attractive force of the permanent magnets.

An orientation method of an active material layer according to another embodiment of the present disclosure includes forming an active material layer on a substrate supplied from a roll, passing the active material layer over a magnet assembly, and orienting the active material layer by using a magnetic force of the magnet assembly, wherein, in the magnet assembly, individual magnets of the same polarity are continuously located in a width direction of the substrate, and individual magnets of different polarities are alternately arranged in a direction in which the active material layer proceeds.

The active material layer may be formed on a substrate of a negative electrode of a secondary battery.

At least some of the above and other features of the invention are set out in the claims.

According to an embodiment of the present disclosure, a permanent magnet is used instead of an electromagnet, which does not generate heat, and thus, a device for removing heat is not required.

In addition, as an assembly is formed by assembling a plurality of permanent magnets, the strength of the magnet may be increased without increasing the size of individual permanent magnets.

### BRIEF DESCRIPTION OF THE DRAWINGS

FIG. 1 is a schematic perspective view of a magnet assembly for orientation according to an embodiment of the present disclosure.
FIG. 2 is a simulation diagram of measuring magnetic forces according to sizes of magnet assemblies according to an embodiment of the present disclosure.
FIG. 3 is a graph showing magnetic forces according to a ratio of the magnet assemblies according to embodiments of Table 2.
FIG. 4 is a diagram for explaining a method of manufacturing a negative electrode according to an embodiment of the present disclosure.
FIG. 5 is a schematic perspective view of a secondary battery according to an embodiment of the present disclosure.

### DETAILED DESCRIPTION OF THE EMBODIMENTS

Hereinafter, with reference to the accompanying drawings, various embodiments of the present disclosure will be described in detail so that those skilled in the art may easily carry out the present disclosure. The present disclosure may be embodied in many different forms and is not limited to the embodiments set forth herein.

Since the size and thickness of each component shown in the drawings are arbitrarily shown for convenience of description, the present disclosure is not necessarily limited to those shown.

In the drawings, the thickness of layers, films, panels, regions, etc., are exaggerated for clarity. Also, in the drawings, for convenience of explanation, the thicknesses of some layers and regions are exaggerated. It will be understood that when an element such as a layer, film, region, or substrate is referred to as being "on" another element, it may be directly on the other element or intervening elements may also be present.

In addition, unless explicitly described to the contrary, the word "comprise", and variations such as "comprises" or "comprising", will be understood to imply the inclusion of stated elements but not the exclusion of any other elements.

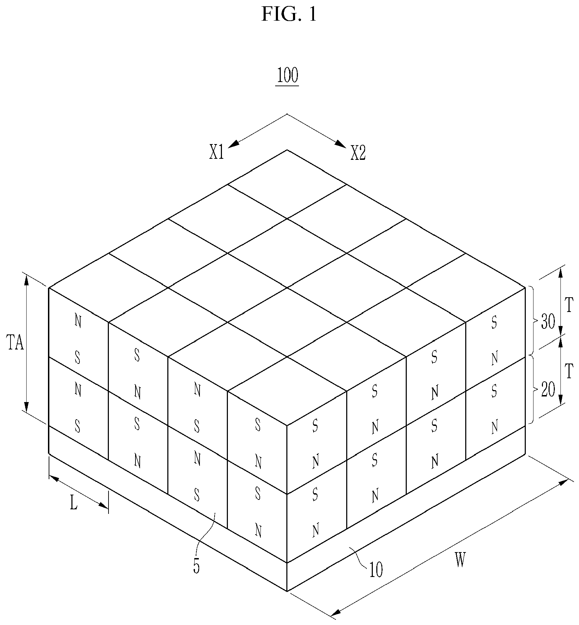

FIG. 1 is a schematic perspective view of a magnet assembly for orientation according to an embodiment of the present disclosure.

As shown in FIG. 1, a magnet assembly 100 for orientation according to an embodiment of the present disclosure includes a metal plate 10, a lower layer 20 attached onto the metal plate 10 and including a plurality of magnets forming a matrix, and an upper layer 30 located on the lower layer 20 and including a plurality of magnets forming a matrix.

The magnets of the magnet assembly 100 for orientation are permanent magnets, each magnet means one magnet in which S pole and N pole are combined, each polarity may not be distinguished with the naked eye, and the strength of each magnetic field may be between 5000 gauss and 7000 gauss. At this time, a ratio of a length L of each magnet 5 to a total thickness TA of the magnet assembly 100 may be 3:1 to 1:2.

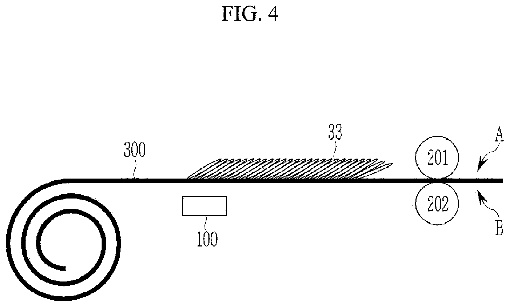

The same N poles or S poles may be continuously disposed in a first direction X1 (or a column direction) of the upper layer 30 forming the matrix. Polarities opposite to neighboring polarities may be disposed in a second direction X2 intersecting the first direction X1, and N poles and S poles may be alternately disposed. At this time, the first direction X1 may be a direction of a width (see FIG. 4) of a substrate to which an active material is applied, and the second direction X2 may be a direction in which coating of the active material proceeds.

The lower layer 20 and the upper layer 30 may be matrices having the same polarity arrangement.

The metal plate 10 may be made of a material attachable by the magnetic force of the lower layer 20, for example, iron or SUS, an attractive force may be applied between the lower layer 20 and the upper layer 30 to be combined by the magnetic force, and a repulsive force may be applied between individual permanent magnets located in the first direction X1.

If the magnet assembly 100 for orientation is formed in a matrix as in the present disclosure, because the attractive force to which the magnet assembly for orientation and the metal plate 10 are attached by the magnetic force is greater than the repulsive force pushed by the same neighboring poles, the magnet assembly 100 for orientation may be formed by being attached to the metal plate 10 without a gap between individual magnets generating the repulsive force. At this time, in order to increase the attractive force attached to the metal plate 10, the area of the individual magnet attached to the metal plate 10 may be increased more than twice the area of a side surface where the repulsive force is generated, or a length ratio of the individual magnet with respect to the total thickness TA may be 3:1 to 1:2. If the area and the ratio are out of the above range, a magnetic line generated in the magnet assembly 100 is trapped inside the magnet and does not escape to the outside, and thus, the magnetic force is weakened.

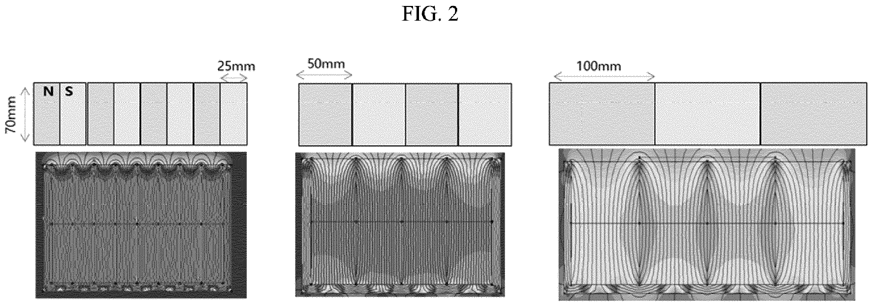

FIG. 2 is a simulation diagram of measuring magnetic forces according to sizes of magnet assemblies according to an embodiment of the present disclosure.

Referring to FIG. 2, the magnet assembly 100 for orientation according to an embodiment of the present disclosure measured the magnetic force generated by stacking, in two stages, individual magnets which are the same in a thickness T of 70 mm and a width W of 150 mm and are different in a length L, such as 25 mm, 50 mm, and 100 mm. This is for measuring the magnetic force with respect to lengths of individual magnets, and the number of individual magnets included in each magnet assembly may vary.

Table 1 shows values obtained by measuring the magnetic forces according to the sizes of the magnet assemblies according to an embodiment of the present disclosure.

**[Table 1]**

| | Strength of magnetic field | |
|---|---|---|
| Size | Individual magnet | Magnet assembly |
| 25L*70T*150W | 6650 | 4300 |
| 50L*70T*150W | 6100 | 5300 |
| 100L*70T*150 | 5220 | 6000 |

Referring to Table 1, if individual magnets have the same thickness T and width W, the shorter the length L, the greater the magnetic force. However, if a magnet assembly having the same size is formed with individual magnets as in an embodiment of the present disclosure, it may be seen that a magnet assembly including relatively long individual magnets has a stronger magnetic force than a magnet assembly including relatively short individual magnets.

This is because, as shown in FIG. 2, the magnetic force generated when connecting relatively small magnets is affected by the neighboring magnetic force and the magnetic force is trapped in the magnet assembly. In an embodiment of the present disclosure, an internal magnetic force trapping phenomenon of the magnet assembly was minimized to maximize an external magnetic force.

In other embodiments, when a magnet assembly is formed by connecting individual magnets, the ratio of the length L of an individual magnet to the total thickness TA of the magnet assembly was designed to 3:1 to 1:2 so that the maximum magnetic force is formed.

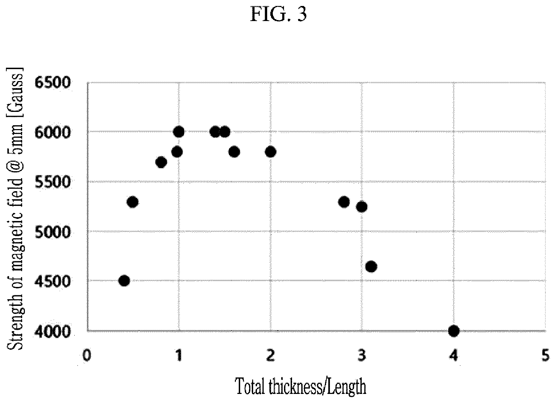

Table 2 shows values of thicknesses and lengths of individual magnets and magnet assemblies for measuring magnetic forces according to the ratio of the magnet assemblies manufactured according to embodiments of the present disclosure, and FIG. 3 is a graph showing the magnetic forces according to the ratio of the magnet assemblies according to the embodiments of Table 2.

**[Table 2]**

| magnet assembly | | individual magnet | | ratio | strength of magnetic field (@5mm) |
|---|---|---|---|---|---|
| total thickness | length | thickness | length | | |
| 140 | 350 | 70 | 350 | 0.4 | 4500 |
| 140 | 280 | 70 | 280 | 0.5 | 5300 |
| 140 | 175 | 70 | 175 | 0.8 | 5700 |
| 140 | 142.8571 | 70 | 142.8571 | 0.98 | 5800 |
| 140 | 140 | 70 | 140 | 1 | 6000 |
| 140 | 140 | 70 | 140 | 1.4 | 6000 |
| 140 | 93.33333 | 70 | 93.3333 | 1.5 | 6000 |
| 140 | 87.5 | 70 | 87.5 | 1.6 | 5800 |
| 140 | 70 | 70 | 70 | 2 | 5800 |
| 140 | 50 | 70 | 50 | 2.8 | 5300 |
| 140 | 46.66667 | 70 | 46.66667 | 3 | 5250 |
| 140 | 45.16129 | 70 | 45.16129 | 3.1 | 4650 |
| 140 | 35 | 70 | 35 | 4 | 4000 |

Referring to Table 2 and FIG. 3, it may be seen that the strength of the magnetic field increases as the ratio of the thickness relatively increases, like the ratio of the length L of an individual permanent magnet to the total thickness TA of the magnet assembly of, for example, 0.5:1, 1.4:1, 2.8:1, and 3:1.

Hereinafter, a method of manufacturing a negative electrode using the magnet assembly for orientation according to the present disclosure described above will be described with reference to the drawings.

FIG. 4 is a diagram for explaining the method of manufacturing the negative electrode according to an embodiment of the present disclosure.

As shown in FIG. 4, an active material layer 33 including an anode active material is formed on one surface A of a substrate 300.

The active material layer 33 may include artificial graphite or a mixture of artificial graphite and natural graphite, and is shown, for convenience of description, as a graphite shape having a long length in one axial direction among various types of graphite.

The substrate 300 is a metal thin plate current collector for forming the negative electrode for a secondary battery, and may be, for example, a copper thin plate.

Thereafter, one axis of the graphite included in the active material layer 33 is oriented so as to be inclined in the same direction by using the magnet assembly 100 for orientation shown in FIG. 1. The magnet assembly 100 for orientation may be disposed on the other surface B of the substrate 300, and a magnetic flux generated from the magnet assembly 100 may be formed in a direction perpendicular to the one surface A of the substrate 300.

A distance between the magnet assembly 100 and the substrate 300 may be within 1 cm, for example, 5 mm, and in the magnet assembly 100, a plurality of individual magnets are stacked, two magnets are stacked in a vertical direction, and N and S poles are alternately arranged in a left and right direction in which the substrate 300 moves so that four magnets are combined by an attractive force. In addition, the same polarity is continuously disposed in a front and rear direction of the magnet assembly 100 across the substrate 300, and may be in the first direction X1 of FIG. 1.

Because graphite particles of the active material layer 33 need to be oriented in the same direction, that is, a direction in which graphite particles are coated, the magnet assembly 100 has different polarities disposed in the coating direction X2 and the same polarity disposed in the width direction X1 of the substrate 300. If the magnet assembly 100 is disposed so that a part thereof combined with different polarities is in the width direction X1 of the substrate 300, the magnetic force is not formed in a direction in which the active material layer 33 is coated, but is formed in a width direction, and thus, an orientation direction of the graphite particles in the active material layer 33 is distorted.

The width of the magnet assembly 100 in the first direction X1 may correspond to the entire width of the substrate 300, and a time during which the active material layer 33 on the substrate 300 is exposed to the magnetic flux may be 1 second to 30 seconds. The graphite may be oriented after application of an anode active material and before an active material layer is dried, one axis of graphite may be a major axis relatively long compared to other parts, and the major axis may be oriented to have a constant angle with respect to the one surface A of the substrate 300 by a magnetic field generated in the magnet assembly 100 for orientation.

The anode active material may be continuously applied on the substrate 300, and an orientation process using the magnet assembly 100 for orientation may also be performed simultaneously. The magnetic field may be formed to have a constant angle with respect to the magnetic flux as a vector function according to a speed at which the substrate 300 is transported so that the major axis of graphite may be oriented to have the constant angle with respect to the one surface A of the substrate 300.

The active material layer 33 including the oriented graphite may be rolled while passing through rollers 201 and 202 disposed in the vertical direction. The rollers 201 and 202 may press the active material layer 33 while rotating in opposite directions, and may be performed immediately after forming the active material layer 33.

The above embodiment has been described as an example in which the active material layer 33 is formed on only the one surface A of the substrate 300 to explain the orientation process, but is not limited thereto, and the orientation process may be performed after forming an active material layer including graphite orientated on one surface of the substrate 300 and forming an active material layer on the other surface of the substrate 300. Thereafter, the active material layers formed on one surface and the other surface of the substrate 300 may be simultaneously rolled and dried to complete the negative electrode.

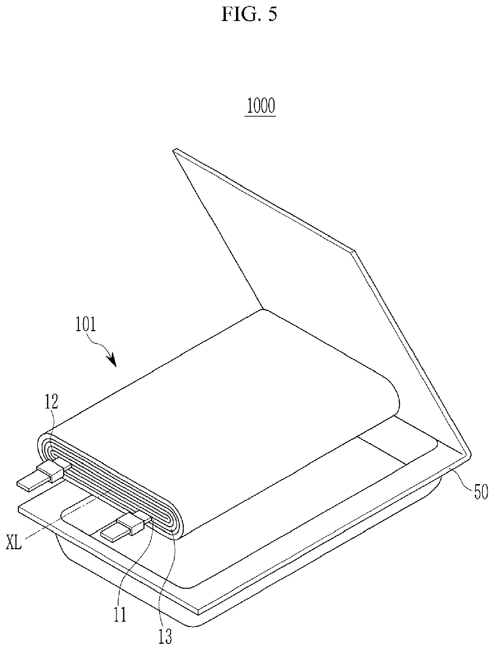

FIG. 5 is a schematic perspective view of a secondary battery according to an embodiment of the present disclosure.

As shown in FIG. 5, a lithium secondary battery 1000 according to an embodiment of the present disclosure includes an electrode assembly 101 wound with a separator 13 interposed between a positive electrode 11 and a negative electrode 12, and a case 50 in which the electrode assembly 101 is embedded. The electrode assembly 101 may be impregnated with an electrolyte.

The electrode assembly 101 may be in the form of a jelly roll wound with respect to a winding axis XL in a state in which the positive electrode 11, the negative electrode 12, and the separator 13 are stacked. If necessary, the electrode assembly 101 may be wound and then pressed flat, and have an approximately elliptical cross section cut in a vertical direction across the winding axis XL.

The negative electrode 12 may be a negative electrode manufactured by the process of FIG. 4 described above.

Graphite included in an active material layer may be oriented to have a constant angle with respect to one surface of a substrate through an orientation process.

The positive electrode 11 includes a substrate and a cathode active material layer formed on the substrate. A compound capable of reversible intercalation and deintercalation of lithium (a lithiated intercalation compound) may be used as a cathode active material. Specifically, at least one of composite oxides of lithium and a metal selected from cobalt, manganese, nickel, and combinations thereof may be used as the cathode active material.

In the positive electrode 11, the content of the cathode active material may be 90% to 98% by weight with respect to the total weight of the cathode active material layer.

In an embodiment of the present disclosure, the cathode active material layer may further include a binder and a conductive material. In this regard, the content of the binder and the conductive material may be 1% to 5% by weight, respectively, with respect to the total weight of the cathode active material layer.

The binder serves to well attach cathode active material particles to each other and also to well attach the cathode active material to a current collector. As representative examples of the binder, polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, styrene butadiene rubber, acrylated styrene butadiene rubber, epoxy resin, nylon, etc. may be used, but are not limited thereto.

The conductive material is used to provide conductivity to an electrode, and in the configured battery, any material is available as long as it does not cause a chemical change and is an electronically conductive material.

Al may be used as a positive electrode substrate, but is not limited thereto.

The electrolyte includes a non-aqueous organic solvent and a lithium salt. The non-aqueous organic solvent serves as a medium capable of moving ions involved in the electrochemical reaction of the battery. The lithium salt is a material that dissolves in an organic solvent and acts as a source of lithium ions in the battery to enable a basic operation of a lithium secondary battery and promotes the movement of lithium ions between a positive electrode and a negative electrode. Representative examples of the lithium salt include one or two or more supporting electrolyte salt selected from the group consisting of LiPF₆, LiBF₄, LiSbF₆, LiAsF₆, LiN(SO₂C₂F5)₂, Li(CF₃SO₂)₂N, LiN(SO₃C₂F5)₂, LiC₄F₉SO₃, LiClO₄, LiAlO₂, LiAlCl₄, LiN(CₓF₂ₓ₊₁SO₂)(C_{y}F_{2y+1}SO₂)(wherein x and y are natural numbers, e.g., integers of 1 to 20), LiCl, Lil, and LiB(C₂O₄)₂ (lithium bis (oxalato) borate: (LiBOB)). The concentration of lithium salt is preferably used within a range of 0.1 M to 2.0 M. If the concentration of the lithium salt is within the above range, because the electrolyte has appropriate conductivity and viscosity, an excellent electrolyte performance may be exhibited, and lithium ions may move effectively.

A separator may exist between the positive electrode and the negative electrode according to the type of lithium secondary battery. As such a separator, polyethylene, polypropylene, polyvinylidene fluoride or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, etc. may be used.

Although the preferred embodiment of the present disclosure has been described above, the present disclosure is not limited thereto and may be modified and implemented in various ways within the scope of the claims and the detailed description of the invention and the accompanying drawings.

**<Description of symbols>**

| | | | |
|---|---|---|---|
| 5: | individual magnet | 10: | metal plate |
| 20: | lower layer | 30: | upper layer |
| 33: | active material layer | 100: | magnet assembly |
| 300: | substrate | | |

## Claims

1. A magnet assembly for orientation comprising:
a metal plate;
a lower layer attached to the metal plate and including a plurality of permanent magnets forming a matrix; and
an upper layer located on the lower layer and including a plurality of permanent magnets forming a same matrix as the matrix,
wherein a ratio of a length of one permanent magnet with respect to a sum of thicknesses of the lower layer and the upper layer is 3:1 to 1:2.

2. The magnet assembly for orientation as claimed in claim 1, wherein
an attractive force attached to the metal plate is greater than a repulsive force generated neighboring in a column direction of the matrix.

3. A magnet assembly for orientation comprising:
a lower layer including a plurality of permanent magnets forming a matrix; and
an upper layer located on the lower layer and including a plurality of permanent magnets forming a same matrix as the matrix,
wherein polarities of the permanent magnets of the lower layer and the upper layer are alternately disposed in a row direction of the matrix, and the polarities of the permanent magnets of the lower layer and the upper layer are equally disposed in a column direction.

4. The magnet assembly for orientation as claimed in claim 3, wherein
a ratio of a length of one permanent magnet with respect to a sum of thicknesses of the lower layer and the upper layer in the row direction is 3:1 to 1:2.

5. The magnet assembly for orientation as claimed in claim 3 or claim 4, wherein
the permanent magnets neighboring in the column direction contact each other.

6. The magnet assembly for orientation of any one as claimed in claims 3 to 5, wherein
the upper layer and the lower layer are combined by an attractive force of the permanent magnets.

7. An orientation method of an active material layer, the orientation method comprising:
forming an active material layer on a substrate supplied from a roll;
passing the active material layer over a magnet assembly of any one as claimed in claims 1 to 6; and
orienting the active material layer by using a magnetic force of the magnet assembly,
wherein, in the magnet assembly, individual magnets of the same polarity are continuously located in a width direction of the substrate, and individual magnets of different polarities are alternately arranged in a direction in which the active material layer proceeds.

8. The orientation method as claimed in claim 7, wherein:
the active material layer is formed on a substrate of a negative electrode of a secondary battery.
